# EUROPEAN PATENT APPLICATION

(11) **EP 4 598 233 A1**
(43) Date of publication of application: **06.08.2025**
(21) Application number: 24750564.7
(22) Date of filing: 31.01.2024
(51) Int. Cl.: H04W 72/25, H04W 72/04, H04W 74/08, H04W 92/18

(54) **METHOD AND DEVICE FOR SIDELINK COMMUNICATION**

(30) Priority: 01.02.2023 KR 20230013869
(71) Applicant: Hyundai Motor Company, Seoul 06797 (KR); Kia Corporation, Seoul 06797 (KR)
(72) Inventor: HONG, Ui Hyun, Hwaseong-si, Gyeonggi-do 18280 (KR)
(74) Representative: Isarpatent
(86) International application number: PCT/KR2024/001481
(87) International publication number: WO 2024/162767

(57) **Abstract**

A method and a device for sidelink (SL) communication are disclosed. A method of a first user equipment (UE) comprises the steps of: receiving information on a first starting symbol from a base station; receiving information on a second starting symbol from the base station; and performing SL transmission from at least one starting symbol among the first starting symbol or the second starting symbol.

## Description

### [Technical Field]

The present disclosure relates to a sidelink communication technique, and more particularly, to a technique for sidelink communication in one or more starting symbols.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like. Meanwhile, methods for improving the performance of sidelink communication are required.

### [Disclosure]

### [Technical Problem]

The present disclosure is directed to providing a method and an apparatus for sidelink communication in one or more starting symbols.

### [Technical Solution]

A method of a first user equipment (UE), according to exemplary embodiments of the present disclosure for achieving the above-described objective, may comprise: receiving information of a first starting symbol from a base station; receiving information of a second starting symbol from the base station; and performing sidelink (SL) transmission from at least one starting symbol among the first starting symbol or the second starting symbol.

The information of the first starting symbol and the information of the second starting symbol may be included in a radio resource control (RRC) message.

The first starting symbol may be one of first to seventh symbols within a slot, and the second starting symbol may be one of fourth to eighth symbols within the slot.

When the information of the first starting symbol is not received, the first UE may use a first symbol within a slot as the first starting symbol.

The SL transmission may include at least one of a physical sidelink control channel (PSCCH) transmission or a physical sidelink shared channel (PSSCH) transmission.

The first starting symbol and the second starting symbol may be configured for each SL bandwidth part (BWP).

The second starting symbol may be located after the first starting symbol in time domain.

A number of symbols used for the SL transmission starting from the second starting symbol may be not less than 6.

Ending symbols of a first SL transmission starting from the first starting symbol and a second SL transmission starting from the second starting symbol within one slot may be same.

The performing of the SL transmission may comprise: determining whether the SL transmission can be performed from the first starting symbol; and performing the SL transmission from the first starting symbol.

The performing of the SL transmission may comprise: determining whether the SL transmission can be performed from the first starting symbol; and in response to determining that the SL transmission cannot be performed from the first starting symbol, performing the SL transmission from the second starting symbol.

A method of a base station, according to exemplary embodiments of the present disclosure for achieving the above-described objective, may comprise: configuring a first starting symbol for a first sidelink (SL) transmission; configuring a second starting symbol for a second SL transmission; and transmitting information of the first starting symbol and information of the second starting symbol to a first user equipment (UE), wherein the first SL transmission between the first UE and the second UE starts from the first starting symbol, and the second SL transmission between the first UE and the second UE starts from the second starting symbol.

The information of the first starting symbol and the information of the second starting symbol may be included in a radio resource control (RRC) message.

The first starting symbol may be one of first to seventh symbols within a slot, and the second starting symbol may be one of fourth to eighth symbols within the slot.

When the information of the first starting symbol is not transmitted, a first symbol within a slot may be used as the first starting symbol.

Each of the first SL transmission and the second SL transmission may include at least one of a physical sidelink control channel (PSCCH) transmission or a physical sidelink shared channel (PSSCH) transmission.

The first starting symbol and the second starting symbol may be configured for each SL bandwidth part (BWP).

The second starting symbol may be located after the first starting symbol in time domain.

A number of symbols used for the second SL transmission starting from the second starting symbol may be not less than 6.

Ending symbols of the first SL transmission starting from the first starting symbol and the second SL transmission starting from the second starting symbol within one slot may be same.

### [Advantageous Effects]

According to the present disclosure, the terminal configures multiple starting symbols within a slot to transmit data without transmission delay.

### [Description of Drawings]

FIG. 1 is a conceptual diagram illustrating scenarios of Vehicle-to-Everything (V2X) communications.
FIG. 2 is a conceptual diagram illustrating a first exemplary embodiment of a communication system.
FIG. 3 is a conceptual diagram illustrating a first exemplary embodiment of a communication node constituting a communication system.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6 is a block diagram illustrating a first exemplary embodiment of a user plane protocol stack of a UE performing sidelink communication.
FIG. 7 is a block diagram illustrating a first exemplary embodiment of a control plane protocol stack of a UE performing sidelink communication.
FIG. 8 is a block diagram illustrating a second exemplary embodiment of a control plane protocol stack of a UE performing sidelink communication.
FIG. 9 is a timing diagram illustrating a first exemplary embodiment of a communication method in an unlicensed band.
FIG. 10 is a conceptual diagram illustrating a first exemplary embodiment of a sidelink slot structure.
FIG. 11 is a conceptual diagram illustrating a second exemplary embodiment of a sidelink slot structure.
FIG. 12 is a sequence chart illustrating a first exemplary embodiment of a method for automatic gain control (AGC) in sidelink communication.
FIG. 13 is a sequence chart illustrating a first exemplary embodiment of a sidelink communication method.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

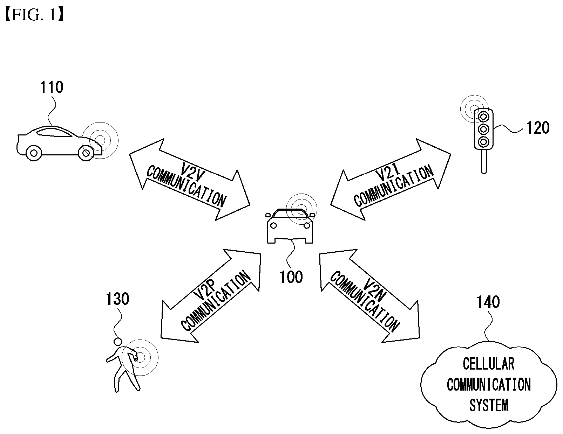

FIG. 1 is a conceptual diagram illustrating scenarios of Vehicle-to-Everything (V2X) communications.

As shown in FIG. 1, V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a communication system (e.g., communication network) 140, and the V2X communications supported by the communication system 140 may be referred to as 'Cellular-V2X (C-V2X) communications'. Here, the communication system 140 may include the 4G communication system (e.g., LTE communication system or LTE-A communication system), 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported by the communication system 140 may be performed based on sidelink communication technologies (e.g., Proximity Based Services (ProSe) and Device-to-Device (D2D) communication technologies, and the like). In this case, the communications between the vehicles 100 and 110 may be performed using at least one sidelink channel.

The V2I communications may include communications between the first vehicle 100 and an infrastructure (e.g., road side unit (RSU)) 120 located on a roadside. The infrastructure 120 may include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported by the communication system 140 may be performed based on sidelink communication technologies (e.g., ProSe and D2D communication technologies, and the like). In this case, the communications between the vehicle 100 and the infrastructure 120 may be performed using at least one sidelink channel.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported by the communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel.

The V2N communications may be communications between the first vehicle 100 (e.g., the communication node located in the vehicle 100) and the communication system (e.g., communication network) 140. The V2N communications may be performed based on the 4G communication technology (e.g., LTE or LTE-A specified as the 3GPP standards) or the 5G communication technology (e.g., NR specified as the 3GPP standards). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, a Wireless Personal Area Network (WPAN) communication technology defined in IEEE 802.15, or the like.

Meanwhile, the communication system 140 supporting the V2X communications may be configured as follows.

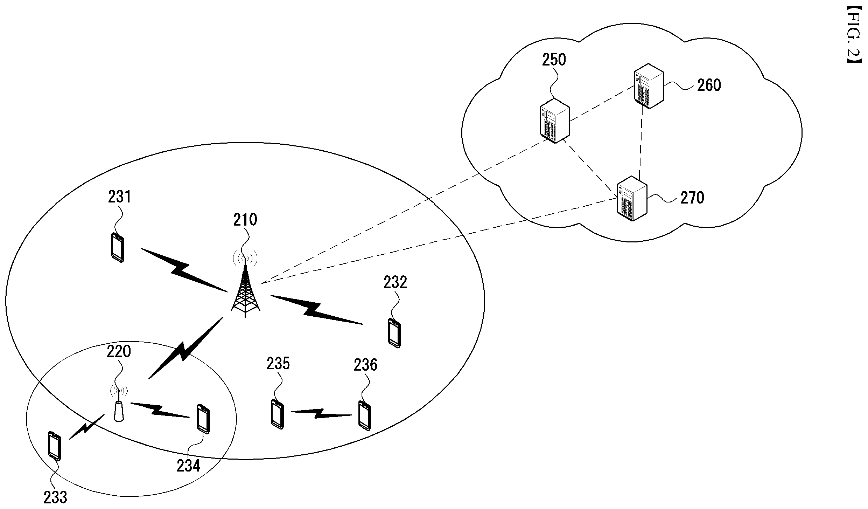

FIG. 2 is a conceptual diagram illustrating a first exemplary embodiment of a communication system.

As shown in FIG. 2, a communication system may include an access network, a core network, and the like. The access network may include a base station 210, a relay 220, user equipment (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the communication system supports the 4G communication technology, the core network may include a serving gateway (S-GW) 250, a packet data network (PDN) gateway (P-GW) 260, a mobility management entity (MME) 270, and the like.

When the communication system supports the 5G communication technology, the core network may include a user plane function (UPF) 250, a session management function (SMF) 260, an access and mobility management function (AMF) 270, and the like. Alternatively, when the communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slices configured in the core network.

The communication nodes (e.g., base station, relay, UE, S-GW, P-GW, MME, UPF, SMF, AMF, etc.) constituting the communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) constituting the communication system may be configured as follows.

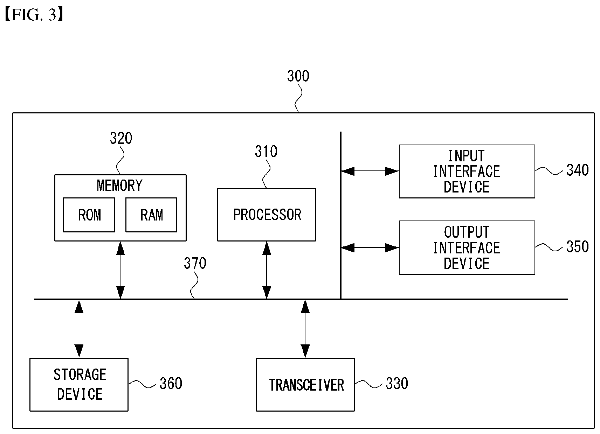

FIG. 3 is a conceptual diagram illustrating a first exemplary embodiment of a communication node constituting a communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one program command stored in at least one of the memory 320 and the storage device 360. The processor 310 may refer to a central processing unit (CPU), a graphics processing unit (GPU), or a dedicated processor on which methods in accordance with exemplary embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to a cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), evolved Node B (eNB), base transceiver station (BTS), radio remote head (RRH), transmission reception point (TRP), radio unit (RU), roadside unit (RSU), radio transceiver, access point, access node, or the like. The relay 220 may be referred to as a small base station, relay node, or the like. Each of the UEs 231 through 236 may be referred to as a terminal, access terminal, mobile terminal, station, subscriber station, mobile station, portable subscriber station, node, device, on-broad unit (OBU), or the like.

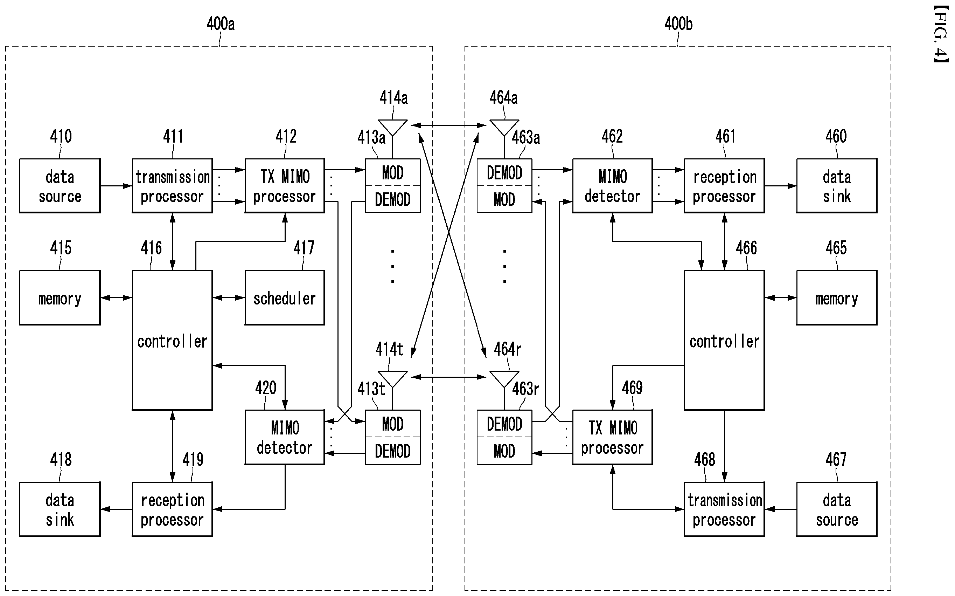

Meanwhile, communication nodes that perform communications in the communication network may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g., data unit) from a data source 410. The transmission processor 411 may receive control information from a controller 416. The control information may include at least one of system information, RRC configuration information (e.g., information configured by RRC signaling), MAC control information (e.g., MAC CE), or PHY control information (e.g., DCI, SCI).

The transmission processor 411 may generate data symbol(s) by performing processing operations (e.g., encoding operation, symbol mapping operation, etc.) on the data. The transmission processor 411 may generate control symbol(s) by performing processing operations (e.g., encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g., precoding operations) on the data symbol(s), control symbol(s), and/or synchronization/reference symbol(s). An output (e.g., symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g., de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g., data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g., precoding operations) on the data symbol(s), control symbol(s), and/or reference symbol(s). An output (e.g., symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g., de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

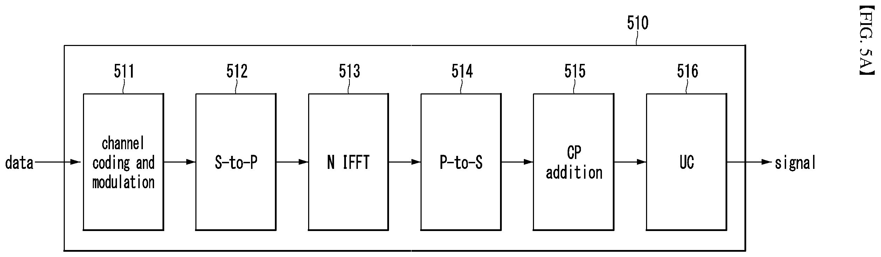

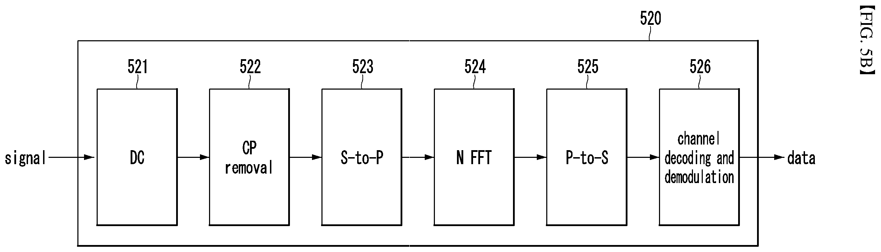

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g., components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, communications between the UEs 235 and 236 may be performed based on sidelink communication technology (e.g., ProSe communication technology, D2D communication technology). The sidelink communication may be performed based on a one-to-one scheme or a one-to-many scheme. When V2V communication is performed using sidelink communication technology, the UE 235 may refer to a communication node located in the first vehicle 100 of FIG. 1, and the UE 236 may refer to a communication node located in the second vehicle 110 of FIG. 1. When V2I communication is performed using sidelink communication technology, the UE 235 may refer to a communication node located in the first vehicle 100 of FIG. 1, and the UE 236 may refer to a communication node located in the infrastructure 120 of FIG. 1. When V2P communication is performed using sidelink communication technology, the UE 235 may refer to a communication node located in the first vehicle 100 of FIG. 1, and the UE 236 may refer to a communication node carried by the person 130.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

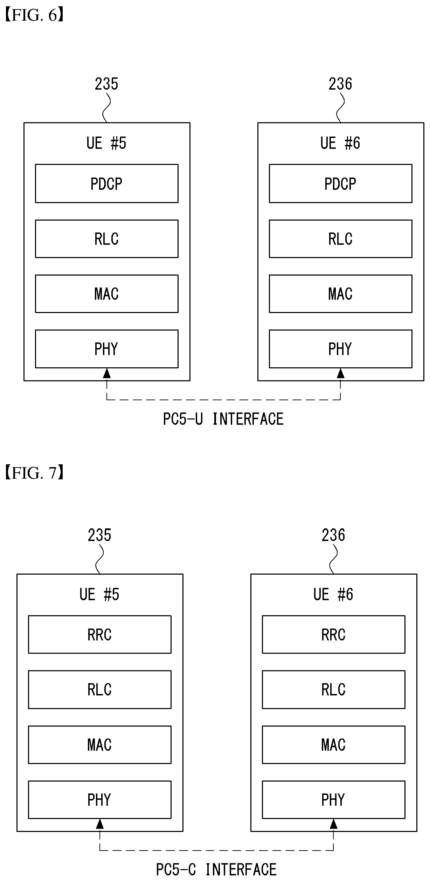

FIG. 6 is a block diagram illustrating a first exemplary embodiment of a user plane protocol stack of a UE performing sidelink communication.

As shown in FIG. 6, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications. Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

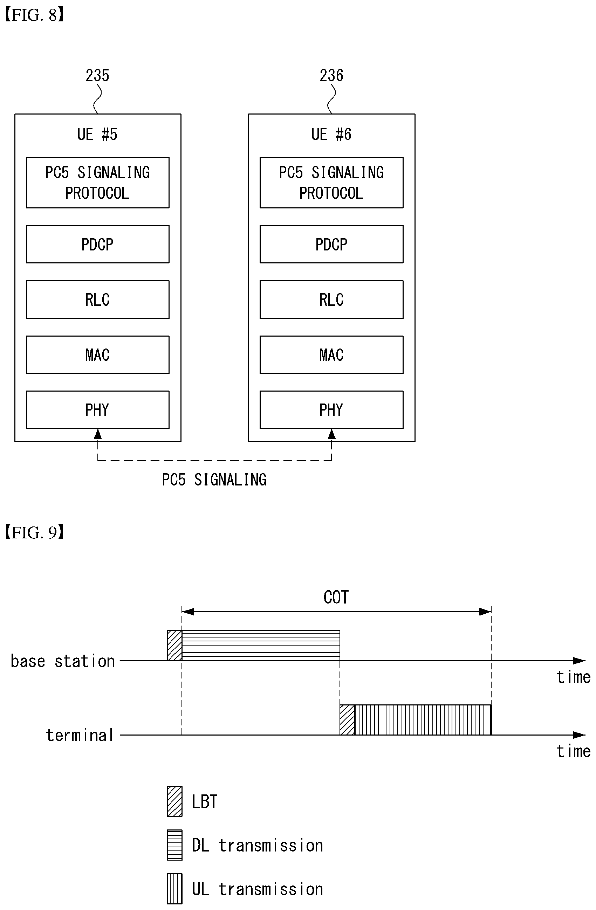

FIG. 7 is a block diagram illustrating a first exemplary embodiment of a control plane protocol stack of a UE performing sidelink communication, and FIG. 8 is a block diagram illustrating a second exemplary embodiment of a control plane protocol stack of a UE performing sidelink communication.

As shown in FIGS. 7 and 8, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The control plane protocol stack illustrated in FIG. 7 may be a control plane protocol stack for transmission and reception of broadcast information (e.g., Physical Sidelink Broadcast Channel (PSBCH)).

The control plane protocol stack shown in FIG. 7 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 8 may be a control plane protocol stack for one-to-one sidelink communication. The control plane protocol stack shown in FIG. 8 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by higher layer signaling. The PSCCH may be used for transmitting and receiving sidelink control information (SCI) and may also be configured in the UE (e.g., UE 235 or 236) by higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The base station may transmit system information (e.g., SIB12, SIB13, SIB14) and RRC messages including configuration information for sidelink communication (i.e., sidelink configuration information) to UE(s). The UE may receive the system information and RRC messages from the base station, identify the sidelink configuration information included in the system information and RRC messages, and perform sidelink communication based on the sidelink configuration information. The SIB12 may include sidelink communication/discovery configuration information. The SIB13 and SIB14 may include configuration information for V2X sidelink communication.

The sidelink communication may be performed within a SL bandwidth part (BWP). The base station may configure SL BWP(s) to the UE using higher layer signaling. The higher layer signaling may include *SL-BWP-Config* and/or *SL-BWP-ConfigCommon. SL-BWP-Config* may be used to configure a SL BWP for UE-specific sidelink communication. SL-*BWP-ConfigCommon* may be used to configure cell-specific configuration information.

Furthermore, the base station may configure resource pool(s) to the UE using higher layer signaling. The higher layer signaling may include *SL-BWP-PoolConfig, SL-BWP-PoolConfigCommon, SL-BWP-DiscPoolConfig,* and/or *SL-BWP-DiscPoolConfigCommon. SL-BWP-PoolConfig* may be used to configure a sidelink communication resource pool. *SL-BWP-PoolConfigCommon* may be used to configure a cell-specific sidelink communication resource pool. *SL-BWP-DiscPoolConfig* may be used to configure a resource pool dedicated to UE-specific sidelink discovery. *SL-BWP-DiscPoolConfigCommon* may be used to configure a resource pool dedicated to cell-specific sidelink discovery. The UE may perform sidelink communication within the resource pool configured by the base station.

The sidelink communication may support SL discontinuous reception (DRX) operations. The base station may transmit a higher layer message (e.g., *SL-DRX-Config)* including SL DRX-related parameter(s) to the UE. The UE may perform SL DRX operations based on *SL-DRX-Config* received from the base station. The sidelink communication may support inter-UE coordination operations. The base station may transmit a higher layer message (e.g., *SL-InterUE-CoordinationConfig)* including inter-UE coordination parameter(s) to the UE. The UE may perform inter-UE coordination operations based on *SL-InterUE-CoordinationConfig* received from the base station.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A, a SCI format 2-B, and a SCI format 2-C.

The SCI format 1-A may be used for scheduling a PSSCH and second-stage SCI. The SCI format 1-A may include at least one among priority information, frequency resource assignment information, time resource assignment information, resource reservation period information, demodulation reference signal (DMRS) pattern information, second-stage SCI format information, beta_offset indicator, number of DMRS ports, modulation and coding scheme (MCS) information, additional MCS table indicator, PSFCH overhead indicator, or conflict information receiver flag.

The SCI format 2-A may be used for decoding of a PSSCH. The SCI format 2-A may include at least one among a HARQ processor number, new data indicator (NDI), redundancy version (RV), source ID, destination ID, HARQ feedback enable/disable indicator, cast type indicator, or CSI request.

The SCI format 2-B may be used for decoding of a PSSCH. The SCI format 2-B may include at least one among a HARQ processor number, NDI, RV, source ID, destination ID, HARQ feedback enable/disable indicator, zone ID, or communication range requirement.

The SCI format 2-C may be used for decoding of a PSSCH. In addition, the SCI format 2-C may be used to provide or request inter-UE coordination information. The SCI format 2-C may include at least one among a HARQ processor number, NDI, RV, source ID, destination ID, HARQ feedback enable/disable indicator, CSI request, or providing/requesting indicator.

When a value of the providing/requesting indicator is set to 0, this may indicate that the SCI format 2-C is used to provide inter-UE coordination information. In this case, the SCI format 2-C may include at least one among resource combinations, first resource location, reference slot location, resource set type, or lowest subchannel indexes.

When a value of the providing/requesting indicator is set to 1, this may indicate that the SCI format 2-C is used to request inter-UE coordination information. In this case, the SCI format 2-C may include at least one among a priority, number of subchannels, resource reservation period, resource selection window location, resource set type, or padding bit(s).

Meanwhile, the sidelink system may require studies on carrier aggregation (CA) operations, operations in an unlicensed band, operations in a frequency range (FR) 2 band, and coexistence of long term evolution (LTE) and new radio (NR) to enhance release-18 (Rel-18) NR sidelink. In particular, the sidelink system may require support for unlicensed band operations in sidelink mode 1 and mode 2 operations. In other words, the NR sidelink system may need to be implemented based on NR-unlicensed (NR-U) operations.

Sidelink communication performed in an unlicensed band may be referred to as sidelink-unlicensed band (SL-U) communication or unlicensed band-sidelink (U-SL) communication. In SL-U communication, a first terminal may perform communication with a second terminal according to mode 1 or mode 2. When mode 1 is used, the first terminal may perform communication with the second terminal based on scheduling by a base station. When mode 2 is used, the first terminal may perform communication with the second terminal without scheduling by a base station. Mode 1 may correspond to the sidelink transmission mode (TM) #1 or #3 described in Table 2. Mode 2 may correspond to the sidelink TM #2 or #4 described in Table 2.

For implementation of such operations in an unlicensed band, the sidelink system may require optimization of sidelink physical channel structures. In this case, the sidelink physical channel structures may be based on the sidelink physical channel structures defined in release-16 NR sidelink. In addition, the NR-U operations defined in release-16 may serve as a starting point for operations of release-18 NR sidelink in an unlicensed band. In this case, a listen-before-talk (LBT) operation in the sidelink system may be defined based on NR-U operations. Accordingly, the present disclosure proposes a demodulation reference signal (DMRS) configuration method according to slot structure configuration for LBT operations of the NR sidelink system.

In the NR sidelink system, operations in an unlicensed band according to mode 1 and mode 2 may be defined based on basic operations and channel structures of NR-U. The NR-U may require LBT operations as a basic regulatory requirement.

FIG. 9 is a timing diagram illustrating a first exemplary embodiment of a communication method in an unlicensed band.

As shown in FIG. 9, a base station may perform a listen-before-talk (LBT) operation to perform downlink (DL) transmission, and if a result of the LBT operation indicates an idle state (e.g., clean state) of a channel, the base station may perform DL transmission. A terminal may perform an LBT operation to perform uplink (UL) transmission, and if a result of the LBT operation indicates an idle state of a channel, the terminal may perform UL transmission. If the result of the LBT operation indicates a busy state of the channel, the DL transmission and/or UL transmission may not be performed. The DL transmission and/or UL transmission may be performed within a channel occupancy time (COT). The COT may be initiated by the base station or terminal. The LBT operations may be performed based on one of categories disclosed in Table 3 below.

**[Table 3]**

| | **Description** |
|---|---|
| Category 1 (Cat 1 LBT) | The transmission operation is performed after a short switching gap of 16 *µs.* The CCA operation is not performed. |
| Category 2 (Cat 2 LBT) | The LBT operation is performed within a fixed CCA period (e.g., *25 µs*) without a random backoff operation. |
| Category 3 (Cat 3 LBT) | The LBT operation is performed based on a random backoff operation and a variable CCA period. The size of contention window is fixed. |
| Category 4 (Cat 4 LBT) | The LBT operation is performed based on a random backoff operation and a variable CCA period. The size of contention window is variable. |

The LBT operation may refer to a clear channel assessment (CCA) operation. The CCA operation may be performed during a CCA period. When the CCA operation is performed, the communication node (e.g., base station and/or terminal) may identify a channel state based on an energy detection (ED) scheme. In other words, the communication node may determine whether another signal exists in the channel. If an energy detected during the CCA period is less than a threshold (e.g., ED threshold), the communication node may determine the channel state as the idle state. In other words, the communication node may determine that no other signals exist in the channel. If the channel state is determined as the idle state, the communication node may access the channel within the COT. If the energy detected during the CCA period is equal to or above the threshold, the communication node may determine the channel state as the busy state. In other words, the communication node may determine that another signal exists in the channel. If the channel state is the busy state, the communication node may not access the channel within the COT.

In an unlicensed band, the communication node may perform the LBT operation and transmit data when a result of the LBT operation indicates the idle state of the channel. In this case, the base station may transmit a DL transmission burst within the COT, and the terminal may transmit a UL transmission burst within the COT. The COT may be configured within a maximum COT (MCOT). A slot duration of CCA may be 5 *µs* ~ 9 *µs.* The duration of the MCOT may be 8 ms. The base station may initiate and/or configure a COT based on a higher layer parameter *SemiStaticChannelAccessConfig.*

*SemiStaticChannelAccessConfig* may include information on a period of the COT. The terminal may identify the COT initiated by the base station based on *SemiStaticChannelAccessConfig.*

The terminal may initiate and/or configure a COT based on a higher layer parameter *SemiStaticChannelAccessConfigUE. SemiStaticChannelAccessConfigUE* may include information on a period and an offset of the COT.

The base station may identify the COT initiated by the terminal based on *SemiStaticChannelAccessConfigUE.* The terminal may initiate and/or configure the COT based on *SemiStaticChannelAccessConfigUE* in the unlicensed band. As another method, the base station may signal *SemiStaticChannelAccessConfigSL-U* for a COT of SL-U communication to the terminal. The COT for SL-U communication may be referred to as a sidelink (SL)-COT. *SemiStaticChannelAccessConfigSL-U* may include information on a period and an offset of the SL-COT. The terminal may configure the SL-COT based on *SemiStaticChannelAccessConfig-U.* Other terminals may identify the COT initiated based on *SemiStaticChannelAccessConfigSL-U.*

In an unlicensed band, the terminal may perform an LBT operation before SL communication (e.g., transmission of SL data) in order to perform the SL communication. If the LBT operation succeeds, a COT may be initiated in the unlicensed band, and the SL communication may be performed within the COT. 'The LBT operation succeeds' may mean that a result of the LBT operation indicates an idle state.

In NR-U, LBT operations may be classified into a type 1 LBT operation for a COT initiation operation and a type 2 LBT operation for transmission within a shared COT. The type 2 LBT operation may be further classified into type 2A/2B/2C LBT operations depending on a transmission gap.

The LBT procedure may be a mechanism in which a base station or a terminal needs to perform clear channel assessment (CCA). The CCA may detect presence or absence (i.e., channel idleness) of other signals on a channel using energy detection (ED). In other words, before using the channel, it may be determined whether the channel is in use or not, and then a specific rule may be applied. If an energy detected during a CCA period is lower than a specific ED threshold, the device may access the channel during a COT.

In other words, the base station or the terminal may be required to identify, through the LBT process, that the channel intended to be occupied is clear before transmitting data for unlicensed band operations. In this case, the base station or the terminal may continuously use the corresponding channel to transmit or receive data during the COT. The COT may necessarily be configured within an MCOT. The LBT operation described below may be expansively interpreted as type 1 LBT, type 2A LBT, type 2B LBT, type 2C LBT, or another newly defined type of LBT operation for unlicensed band operations in sidelink communication. The base station or terminal may also be required to perform an LBT operation before transmission in SL-U, as in NR-U, in order to transmit data in an unlicensed band during an arbitrary time.

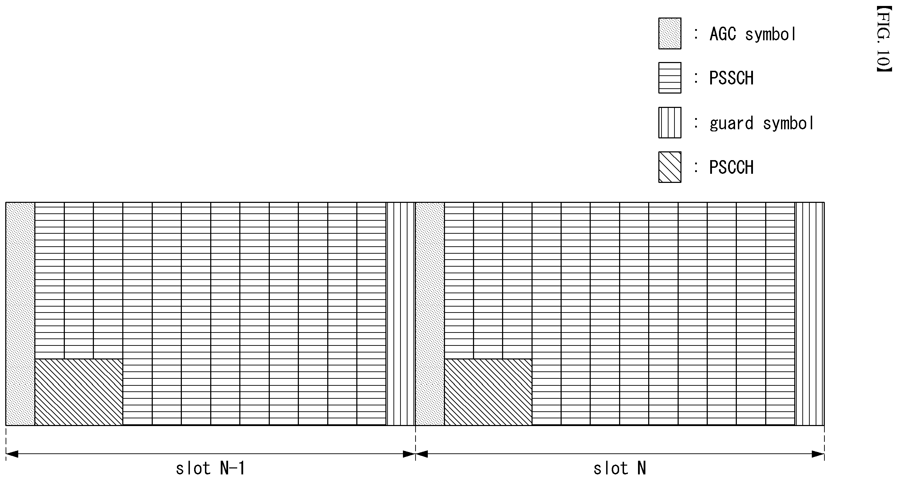

FIG. 10 is a conceptual diagram illustrating a first exemplary embodiment of a sidelink slot structure.

As shown in FIG. 10, a slot may include 14 symbols (e.g., 14 SL symbols), a symbol #0 may be an automatic gain control (AGC) symbol, and a symbol #13 may be a guard symbol. The remaining symbols within the slot, excluding the AGC symbol and the guard symbol, may be used for PSCCH transmission, PSSCH transmission, and/or demodulation reference signal (DMRS) transmission. The AGC symbol may refer to a symbol used for AGC operations. The AGC symbol may have a symbol index 0 within the slot. The guard symbol may have a symbol index 13 within the slot and may not include a PSSCH. A PSCCH symbol may refer to a symbol used for PSCCH transmission. A PSSCH symbol may refer to a symbol used for PSSCH transmission. A DMRS symbol may refer to a symbol used for DMRS transmission.

In this slot structure, symbols for a PSCCH may be three symbols. However, in the slot structure, if the base station or terminal fails an LBT operation in an AGC symbol or a preceding symbol of the AGC symbol in a slot N-1, the base station or terminal may not be able to transmit a PSCCH or PSSCH in the corresponding slot N-1. The base station or the terminal may later succeed in an LBT operation at a specific symbol in the slot N-1. In such a case, the base station or the terminal may transmit the PSCCH and PSSCH in a slot N, which includes the next AGC symbol. Accordingly, a transmission delay on a slot basis may occur. To prevent such delay, two starting symbols may be configured within a slot for PSCCH and PSSCH transmission. In such a case, the sidelink system may determine positions of the two starting symbols, a configuration method of the positions, and operations within the starting symbols (e.g., whether AGC is configured).

The base station or the terminal may require an AGC operation for transmitting and receiving a PSCCH and PSSCH in sidelink communication. The release-17 technical specifications have defined that the first symbol of a slot is used for AGC operation. Accordingly, in SL-U, an LBT operation may be performed immediately before the AGC operation. The base station or the terminal may transmit a PSCCH and PSSCH after the AGC operation following the LBT operation.

For example, the base station or the terminal may perform an LBT operation at a specific symbol (e.g., the last symbol, that is, a guard symbol) of the slot N-1 and then transmit a PSCCH and PSSCH in the slot N after the AGC operation at the first symbol of the slot N. Here, transmitting a PSCCH and PSSCH after the AGC operation may be interpreted as transmitting the PSCCH and PSSCH from a symbol immediately following the AGC symbol.

Meanwhile, considering a CCA slot duration, a period for the LBT operation may be configured within one symbol (e.g., 71.4 µs) based on a subcarrier spacing (SCS) of 15 kHz. Considering the CCA slot duration, the period for the LBT operation may be applied in a similar manner to other SCS values. For example, when the SCS is larger, the period for the LBT operation may be configured in two or more symbols to secure a time duration equivalent to the CCA slot duration.

In this SL slot structure, the base station or the terminal may fail an LBT operation at the AGC symbol (i.e., symbol #0 among symbols #0 to #13) of the slot N-1 or a preceding symbol of the AGC symbol. In this case, even if the base station or the terminal succeeds in an LBT operation at the symbol #1, the base station or the terminal may not be able to transmit a PSCCH and PSSCH within the slot N-1. Accordingly, the base station or the terminal may require a second starting symbol.

Meanwhile, the base station or the terminal may configure all symbols within a slot as starting symbols. In such a case, a receiving terminal may be required to perform blind detection (BD) for PSCCH reception at all symbols. Therefore, the base station or the terminal may pre-configure two starting symbols at specific positions.

In this case, the first starting symbol may be a specific symbol that is not pre-indicated by higher layer signaling. If a specific symbol is not indicated by higher layer signaling (i.e., a default case), the first starting symbol may be the first symbol of the slot. Alternatively, the first starting symbol may be a symbol indicated by higher layer signaling. A parameter indicating the starting symbol may be represented as *sl-StartSymbol,* for example. Accordingly, *sl-StartSymbol* may indicate one of the symbol #0 to symbol #(K-1). In such a case, a symbol immediately following the first starting symbol may be used for AGC operation. Here, the number of symbols within a slot may be N, and K may be smaller than N. N and K may be integers.

If the first starting symbol overlaps with a symbol used for transmitting a reference signal (RS), SL-U transmission may not be allowed in the corresponding slot. For example, the first starting symbol may overlap with a symbol transmitting a PSCCH DMRS, PSSCH DMRS, sidelink channel state information reference signal (SL CSI-RS), or sidelink phase tracking reference signal (SL PT-RS). In this case, the sidelink system may not allow SL-U transmission in the corresponding slot. In such a case, the base station or the terminal may transmit a PSCCH and PSSCH at the first starting symbol of the next slot. Alternatively, the base station or the terminal may perform an AGC operation at the earliest symbol, among symbols following the corresponding symbol, in which RS transmission does not occur.

In the above description, *sl-StartSymbol* may indicate a symbol immediately following the symbol in which the LBT operation is successful. Alternatively, *sl-StartSymbol* may indicate a symbol that is a specific number of symbols after the symbol in which the LBT operation is successful, considering a processing time. In the above description, the value of K may be set for each resource pool in consideration of a priority of a PSCCH and PSSCH to be transmitted or a packet delay budget (PDB). In other words, when a priority is high or a PDB is short, the value K may be set to be small. Additionally, the maximum value of K may be set in consideration of the position of the second starting symbol. For example, the maximum value of K may be 7.

When a specific symbol is not indicated as the second starting symbol by higher layer signaling (i.e., in a default case), the second starting symbol may be fixed to a specific symbol within a slot. Alternatively, when a specific symbol is not indicated as the second starting symbol by higher layer signaling (i.e., in a default case), the second starting symbol may be indicated as a specific symbol within the slot.

If the first starting symbol is the symbol #0, the second starting symbol may be fixed to the symbol #4. In such a case, a 1-bit indicator may be used to indicate the absence of the second starting symbol when set to 0. Conversely, when set to 1, the 1-bit indicator may indicate the presence and position of the second starting symbol.

Alternatively, the position of the second starting symbol may be configured with two or more positions, and an indicator for indicating the corresponding position may be used. For example, the position of the second starting symbol may be two symbols, such as the symbol #4 and symbol #7. In such a case, if the 1-bit indicator does not exist, it may indicate that there is no second starting symbol. Conversely, if the indicator exists, it may indicate the symbol #4 when the indicator is set to 0 and the symbol #7 when the indicator is set to 1. In this manner, multiple starting symbols may be configured through RRC signaling, and one starting symbol may be indicated through an SCI or MAC CE.

As another exemplary embodiment, when a two-bit indicator is used, a value of 00 may indicate that there is no second starting symbol, and values from 01 to 11 may indicate that the second starting symbol is a specific symbol (i.e., symbol #4, symbol #7, or symbol #10).

The receiving terminal, upon failing blind detection (BD) for a PSCCH at the position of the first starting symbol, may utilize the information of the indicator to determine the existence and position of the second starting symbol and perform PSCCH BD accordingly. In such a case, the indicator may be set for each resource pool in consideration of a priority of the PSCCH and PSSCH or a packet delay budget.

Alternatively, when the first starting symbol is indicated through higher layer signaling, the second starting symbol may also be indicated through higher layer signaling. For example, *sl-StartSymbol2* may be indicated as one value among symbol #L (L > K) to symbol #M. Here, K, L, and M may be positive integers. When the number of symbols within a slot is N, M may be smaller than N. N may be a positive integer.

In the above description, the value of M may be set for each resource pool in consideration of a priority of a PSCCH and PSSCH to be transmitted or a packet delay budget. Additionally, the maximum value of M may be set in consideration of the position of the first starting symbol in the next slot. For example, the maximum value of M may be 9.

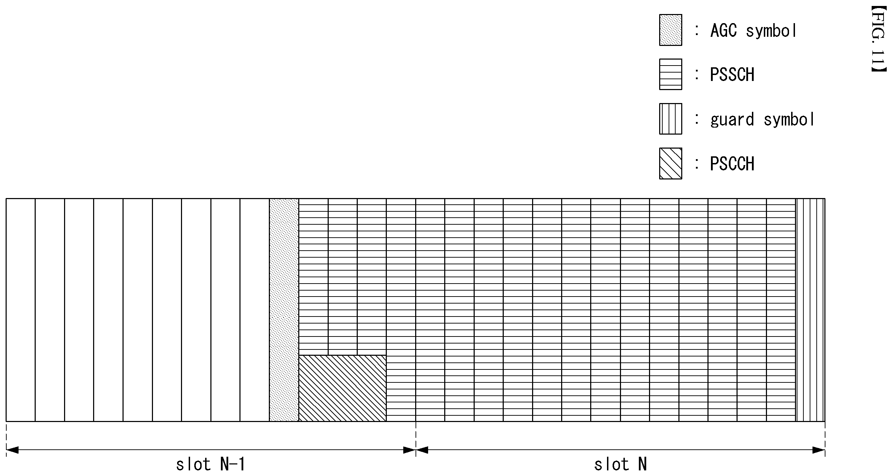

FIG. 11 is a conceptual diagram illustrating a second exemplary embodiment of a sidelink slot structure.

As shown in FIG. 11, a slot may include 14 symbols (e.g., 14 SL symbols), and the remaining symbols in the slot, except for the AGC and guard symbols, may be used for PSCCH transmission, PSSCH transmission, and DMRS transmission. If M exceeds a certain threshold (e.g., 9), there may be less time-domain space available for mapping a PSCCH/PSSCH. Therefore, the PSCCH/PSSCH may be transmitted in the first symbol of the next slot (e.g., slot N) without an AGC operation in that symbol.

Alternatively, when the first starting symbol is indicated through higher layer signaling, the second starting symbol may be pre-configured as a symbol that is Y symbols after the first starting symbol. For example, if the first starting symbol is the symbol #4, the second starting symbol may be pre-configured as the symbol #8, which is the fourth symbol after the symbol #4. Here, Y may be a positive integer.

When the second starting symbol is configured, a symbol immediately following the second starting symbol may be used for AGC operation. If the corresponding symbol overlaps with a symbol in which an RS is transmitted, SL-U transmission in the corresponding slot may not be allowed. In such a case, a PSCCH and PSSCH may be transmitted at the first starting symbol of the next slot. Alternatively, an AGC operation may be performed at the earliest symbol, among symbols following the corresponding symbol, in which RS transmission does not occur.

In the above description, it has been assumed that there are two starting symbols for SL-U communication. However, the same method may be similarly applied even when there are more than two starting symbols. Additionally, in the above description, considering a CCA slot duration, a period for the LBT operation may be configured within one symbol (e.g., 71.4 µs) based on an SCS of 15 kHz, and a similar method may be applied for other SCS values. For example, when the SCS is large, the period for the LBT operation may be configured in two or more symbols to secure a time duration equivalent to the CCA slot duration.

Additionally, the configuration of the starting symbols in SL-U, as described above, may be applied differently depending on an SCS. Considering a duration of one slot, the two-starting-symbol slot structure may be applied only when the SCS is 15 kHz, whereas only a single-starting-symbol slot structure may be applied when the SCS is 30 kHz or higher.

Furthermore, in the above description, the period for the LBT operation in the sidelink system may be configured in time units (or another unit) rather than in symbol units. In such a case, the aforementioned operations may be applied in a similar manner.

Additionally, information on (resources of) the operation and configuration of the period for the LBT operation in the sidelink system (and/or information on whether to apply a proposed rule) may be configured (by the network or base station) differently (or independently) for each resource pool (and/or service type/priority, and/or whether power-saving operation is applied, and/or service quality of service (QoS) parameters (e.g., reliability, latency), and/or terminal type (e.g., V-UE or P-UE)). Alternatively, such configuration may be implicitly determined based on predefined parameters.

Moreover, in the above description, whether each rule is applied may be pre-configured (specific to a resource pool or service) by the base station or network according to the conditions (or parameters) or a combination of the conditions (or parameters). Alternatively, such configuration may be established through PC5 RRC signaling between the base station and one or more UEs or among UEs.

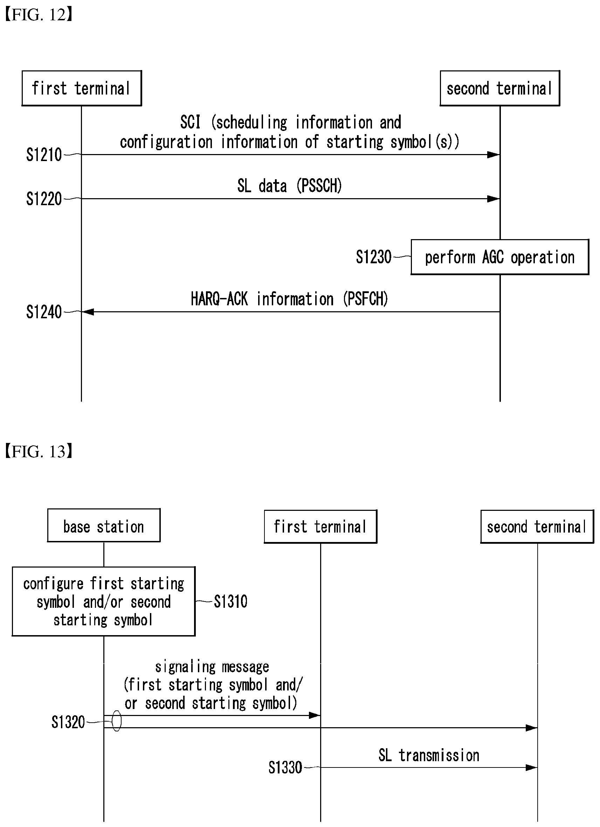

FIG. 12 is a sequence chart illustrating a first exemplary embodiment of a method for automatic gain control (AGC) in sidelink communication.

As shown in FIG. 12, a first terminal may be a transmitting terminal that transmits data (e.g., SL data), and a second terminal may be a receiving terminal that receives the data. The first terminal may generate an SCI including scheduling information of data (e.g., PSSCH) and configuration information of starting symbol(s). The starting symbol may be a symbol in which AGC operation is performed. The configuration information of the starting symbol(s) may indicate one or more starting symbols configured within a slot.

The first terminal may transmit the SCI to the second terminal (S1210). The second terminal may receive the SCI from the first terminal and may identify information elements included in the SCI. For example, the second terminal may identify the scheduling information of the data and the configuration information of the starting symbol(s) included in the SCI. As another method, instead of using the SCI (e.g., SCI including scheduling information of data), the first terminal may transmit the configuration information of the starting symbol(s) to the second terminal through another signaling message (e.g., RRC signaling message or MAC signaling message). In other words, the scheduling information of the data may be transmitted through the SCI, and the configuration information of the starting symbol may be transmitted through the SCI or another signaling message. As yet another method, a base station may notify the terminal(s) (e.g., the first terminal and/or the second terminal) of the configuration information of the starting symbol(s) through a signaling message. In other words, the configuration information of the starting symbol(s) may be signaled by the base station instead of by the first terminal.

The second terminal may identify the configuration information of the starting symbol(s) based on the above-described method(s). The second terminal may identify AGC symbol(s) in which an AGC operation for transmitting HARQ-ACK information (e.g., feedback information) is performed based on the configuration information of the starting symbol(s). In other words, the second terminal may identify the position(s) of the starting symbol(s) within a slot and, based on this, identify the position(s) of the AGC symbol(s).

The first terminal may transmit the data (e.g., PSSCH) scheduled by the SCI to the second terminal (S1220). The second terminal may receive the data from the first terminal based on the scheduling information included in the SCI. The second terminal may perform an AGC operation for transmitting HARQ-ACK information (e.g., ACK or NACK for the data) (S1230). The AGC operation may be performed in the AGC symbol(s) identified based on the configuration information. The second terminal may perform an AGC operation based on the first starting symbol and, when the AGC operation is successful, may transmit HARQ-ACK information to the first terminal (S1240).

If the AGC operation based on the first starting symbol fails, the second terminal may perform an AGC operation based on the second starting symbol following the first starting symbol. If the AGC operation based on the second starting symbol is successful, the second terminal may transmit HARQ-ACK information to the first terminal (S1240). The first terminal may receive the HARQ-ACK information from the second terminal. If the HARQ-ACK information indicates ACK, the first terminal may determine that the data has been successfully received by the second terminal. If the HARQ-ACK information indicates NACK, the first terminal may determine that reception of the data at the second terminal has failed. In this case, the first terminal may retransmit the data.

FIG. 13 is a sequence chart illustrating a first exemplary embodiment of a sidelink communication method.

As shown in FIG. 13, the base station may configure at least one starting symbol of the first starting symbol or the second starting symbol (S1310). The first starting symbol may be one of the symbols #0 to #6 within a slot. The symbol #0 may be the first symbol within the slot, and the symbol #6 may be the seventh symbol within the slot. The second starting symbol may be one of the symbols #3 to #7 within the slot. The symbol #3 may be the fourth symbol within the slot, and the symbol #7 may be the eighth symbol within the slot. The second starting symbol may be positioned after the first starting symbol in the time domain. Sidelink transmission may be performed from the first starting symbol and/or the second starting symbol within the slot.

The base station may configure the first starting symbol and/or the second starting symbol for each sidelink bandwidth part (SL BWP). For example, the base station may configure a first starting symbol and/or a second starting symbol for a first SL BWP and configure a first starting symbol and/or a second starting symbol for a second SL BWP. The first starting symbol and/or the second starting symbol for the first SL BWP may be the same as or different from the first starting symbol and/or the second starting symbol for the second SL BWP.

The base station may generate a sidelink information element (SL IE) (e.g., *SL-BWP-Config* IE, *SL-BWP-ConfigCommon* IE) including information on the first starting symbol and/or the second starting symbol. The information on the first starting symbol may be represented as *sl-StartingSymbolFirst,* and the information on the second starting symbol may be represented as *sl-StartingSymbolSecond.* The base station may transmit a signaling message (e.g., RRC message, MAC CE, or DCI) including the information on the first starting symbol and/or the second starting symbol to terminal(s) (e.g., the first terminal, the second terminal, etc.) (S1320). The RRC message may include *SL-BWP-Config IE* and/or *SL-BWP-ConfigCommon* IE, and each of *SL-BWP-Config* IE and *SL-BWP-ConfigCommon* IE may include *sl-StartingSymbolFirst* and/or *sl-StartingSymbolSecond.*

The first terminal may receive the signaling message (e.g., RRC message, MAC CE, or DCI) from the base station and may identify the information on the first starting symbol and/or the second starting symbol included in the signaling message. If the signaling message does not include information on the first starting symbol, the first terminal may regard the first starting symbol as a default symbol. The default symbol may be the first symbol (e.g., symbol #0) within the slot. In this case, the first terminal may perform sidelink transmission from the first starting symbol, which is the first symbol. In other words, the first terminal may determine that sidelink transmission can be performed from the first starting symbol, which is the first symbol.

The second terminal may receive the signaling message (e.g., RRC message, MAC CE, or DCI) from the base station and may identify the information on the first starting symbol and/or the second starting symbol included in the signaling message. If the signaling message does not include information on the first starting symbol, the second terminal may regard the first starting symbol as a default symbol. The default symbol may be the first symbol (e.g., symbol #0) within the slot. In this case, the second terminal may perform sidelink transmission from the first starting symbol, which is the first symbol. In other words, the second terminal may determine that sidelink transmission can be performed from the first starting symbol, which is the first symbol.

As another method, step S1310 may be performed by the first terminal. For example, the first terminal may configure at least one of the first starting symbol or the second starting symbol. The first terminal may transmit a signaling message (e.g., RRC message, MAC CE, or SCI) including information on the first starting symbol and/or the second starting symbol to the second terminal. The second terminal may receive the signaling message (e.g., RRC message, MAC CE, or SCI) from the first terminal and may identify the information on the first starting symbol and/or the second starting symbol included in the signaling message. If the signaling message does not include information on the first starting symbol, the second terminal may regard the first starting symbol as a default symbol. The default symbol may be the first symbol (e.g., symbol #0) within the slot. In this case, the second terminal may determine that sidelink transmission can be performed from the first starting symbol, which is the first symbol.

The first terminal may perform sidelink transmission from at least one of the first starting symbol or the second starting symbol (S1330). The second terminal may receive the sidelink transmission from the first terminal starting from at least one of the first starting symbol or the second starting symbol. The sidelink transmission may be at least one of PSCCH transmission or PSSCH transmission for the second terminal. The first terminal may determine whether the first sidelink transmission can be performed from the first starting symbol. If the first sidelink transmission can be performed from the first starting symbol, the first terminal may perform the first sidelink transmission from the first starting symbol. If the first sidelink transmission cannot be performed from the first starting symbol, the first terminal may determine whether a second sidelink transmission can be performed from the second starting symbol. If the second sidelink transmission can be performed from the second starting symbol, the first terminal may perform the second sidelink transmission from the second starting symbol. The number of symbols used for the second sidelink transmission starting from the second starting symbol within the slot may not be less than 6. In other words, the number of symbols used for the second sidelink transmission starting from the second starting symbol within the slot may be equal to or greater than 6.

If sidelink transmission cannot be performed at both the first starting symbol and the second starting symbol within the slot #n, the first terminal may not perform sidelink transmission in the slot #n. The first terminal may attempt sidelink transmission at the first starting symbol and/or the second starting symbol within a slot #m after the slot #n. Each of n and m may be a natural number, and m may be greater than n. The position of the first starting symbol within the slot #n may be the same as the position of the first starting symbol within the slot #m. The position of the second starting symbol within the slot #n may be the same as the position of the second starting symbol within the slot #m.

In other words, the signaling message including information on the first starting symbol and/or the second starting symbol may be equally applied to one or more slots (e.g., consecutive slots or non-consecutive slots. Information on the one or more slots to which the same first starting symbol and/or the same second starting symbol is applied (e.g., an index of a starting slot of the one or more slots, an index of an ending slot of the one or more slots, the number of the one or more slots, and/or a slot offset) may be included in the signaling message (e.g., the signaling message including information on the first starting symbol and/or the second starting symbol).

The first terminal may perform the first sidelink transmission from the first starting symbol and the second sidelink transmission from the second starting symbol within the same slot. If the first sidelink transmission can be performed from the first starting symbol and the second sidelink transmission can be performed from the second starting symbol within the same slot, the first terminal may perform the first sidelink transmission and the second sidelink transmission within the same slot. The ending symbol of the first sidelink transmission and the ending symbol of the second sidelink transmission within the same slot may be the same. A first frequency band in which the first sidelink transmission is performed may be different from a second frequency band in which the second sidelink transmission is performed within the same slot. Alternatively, if the first sidelink transmission and the second sidelink transmission are performed within the same slot, the second sidelink transmission may be performed after the first sidelink transmission ends. In this case, the first frequency band in which the first sidelink transmission is performed may be the same as the second frequency band in which the second sidelink transmission is performed within the same slot.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a first user equipment (UE), comprising:
receiving information of a first starting symbol from a base station;
receiving information of a second starting symbol from the base station; and
performing sidelink (SL) transmission from at least one starting symbol among the first starting symbol or the second starting symbol.

2. The method according to claim 1, wherein the information of the first starting symbol and the information of the second starting symbol are included in a radio resource control (RRC) message.

3. The method according to claim 1, wherein the first starting symbol is one of first to seventh symbols within a slot, and the second starting symbol is one of fourth to eighth symbols within the slot.

4. The method according to claim 1, wherein when the information of the first starting symbol is not received, the first UE uses a first symbol within a slot as the first starting symbol.

5. The method according to claim 1, wherein the SL transmission includes at least one of a physical sidelink control channel (PSCCH) transmission or a physical sidelink shared channel (PSSCH) transmission.

6. The method according to claim 1, wherein the first starting symbol and the second starting symbol are configured for each SL bandwidth part (BWP).

7. The method according to claim 1, wherein the second starting symbol is located after the first starting symbol in time domain.

8. The method according to claim 1, wherein a number of symbols used for the SL transmission starting from the second starting symbol is not less than 6.

9. The method according to claim 1, wherein ending symbols of a first SL transmission starting from the first starting symbol and a second SL transmission starting from the second starting symbol within one slot are same.

10. The method according to claim 1, wherein the performing of the SL transmission comprises:
determining whether the SL transmission can be performed from the first starting symbol; and
performing the SL transmission from the first starting symbol.

11. The method according to claim 1, wherein the performing of the SL transmission comprises:
determining whether the SL transmission can be performed from the first starting symbol; and
in response to determining that the SL transmission cannot be performed from the first starting symbol, performing the SL transmission from the second starting symbol.

12. A method of a base station, comprising:
configuring a first starting symbol for a first sidelink (SL) transmission;
configuring a second starting symbol for a second SL transmission; and
transmitting information of the first starting symbol and information of the second starting symbol to a first user equipment (UE),
wherein the first SL transmission between the first UE and the second UE starts from the first starting symbol, and the second SL transmission between the first UE and the second UE starts from the second starting symbol.

13. The method according to claim 12, wherein the information of the first starting symbol and the information of the second starting symbol are included in a radio resource control (RRC) message.

14. The method according to claim 12, wherein the first starting symbol is one of first to seventh symbols within a slot, and the second starting symbol is one of fourth to eighth symbols within the slot.

15. The method according to claim 12, wherein when the information of the first starting symbol is not transmitted, a first symbol within a slot is used as the first starting symbol.

16. The method according to claim 12, wherein each of the first SL transmission and the second SL transmission includes at least one of a physical sidelink control channel (PSCCH) transmission or a physical sidelink shared channel (PSSCH) transmission.

17. The method according to claim 12, wherein the first starting symbol and the second starting symbol are configured for each SL bandwidth part (BWP).

18. The method according to claim 12, wherein the second starting symbol is located after the first starting symbol in time domain.

19. The method according to claim 12, wherein a number of symbols used for the second SL transmission starting from the second starting symbol is not less than 6.

20. The method according to claim 12, wherein ending symbols of the first SL transmission starting from the first starting symbol and the second SL transmission starting from the second starting symbol within one slot are same.
